# FASCICULE DE BREVET EUROPEEN

(11) **EP 1 772 649 B1**
(45) Date de publication et mention de la délivrance du brevet: **09.07.2008**
(21) Numéro de dépôt: 06291524.4
(22) Date de dépôt: 28.09.2006
(51) Int. Cl.: F16H 59/02, G01D 5/16

(54) **Levier de commande de vitesses**
Schalthebel für Getriebe
Gear shift lever

(30) Priorité: 04.10.2005 FR 0510137
(43) Date de publication de la demande: 11.04.2007
(73) Titulaire: Teleflex Automotive France SA, 74300 Cluses (FR)
(72) Inventeur: Rapin, Georges, 74300 Thyez (FR)
(74) Mandataire: Ramey, Daniel

(56) Documents cités:
- EP-A- 0 770 799
- EP-A- 1 150 094
- EP-A- 1 314 916
- EP-A- 1 375 981
- WO-A-20/04005765
- DE-A1- 3 431 523
- DE-A1- 4 109 658
- DE-C1- 19 733 719
- GB-A- 2 091 423
- US-A- 4 500 867
- US-A- 5 791 197

## Description

L'invention concerne un levier de commande de vitesses, en particulier pour véhicule automobile, ce levier étant monté à rotation autour de deux axes, respectivement de sélection et d'engagement de vitesse, et comprenant des capteurs de position du type sans contact dont les signaux de sortie sont appliqués à un calculateur.

Les avantages d'un tel levier de commande sont nombreux :
durée de vie élevée en raison de l'absence de frottements et d'usure des contacts, absence de bruits de commutation, bonne tenue aux vibrations, absence d'efforts parasites, temps de commutation beaucoup plus faibles, etc.

Dans les réalisations connues, voir par exemple le document GB-A-2 091 423, les capteurs sans contact sont par exemple des capteurs optiques, magnétiques ou autres susceptibles de détecter l'absence ou la présence d'un écran ou d'un aimant permanent. Le coût du levier de commande est lié au nombre de capteurs qui équipent ce levier et qui doivent permettre de déterminer les sens de déplacement et les positions du levier avec une grande exactitude, un nombre plus élevé de capteurs améliorant la fiabilité mais augmentant le coût et la complexité du montage, du câblage et du traitement des signaux.

Il n'est en général pas possible de réduire le nombre de capteurs, dont chacun génère un signal de sortie qui représente une information de position ou de déplacement du levier.

L'invention a notamment pour but d'apporter une solution simple, efficace et économique à ce problème, grâce à un levier de commande de vitesses à capteurs sans contact, qui est équipé d'un nombre minimal de capteurs.

Elle propose à cet effet un levier de commande de vitesses, en particulier pour véhicule automobile, monté à rotation sur deux arbres perpendiculaires de sélection et d'engagement de vitesses, et comprenant des capteurs de position du type sans contact dont les signaux de sortie sont appliqués à un calculateur déterminant les sens de déplacement et les positions du levier, caractérisé en ce que lesdits capteurs sont des capteurs à magnétorésistances et sont au nombre de deux, chaque capteur comprenant un aimant permanent porté par le levier et susceptible de se déplacer en regard d'un circuit électrique correspondant monté sur des moyens fixes de support du levier, les aimants permanents des deux capteurs étant portés par le même arbre de rotation du levier.

Le levier selon l'invention est remarquable en ce qu'il ne comprend que deux capteurs sans contact disposés sur un même axe de rotation, qui suffisent à fournir les informations nécessaires pour déterminer exactement la position dans laquelle se trouve le levier parmi un nombre relativement élevé de positions possibles, et le sens dans lequel le levier est ou a été déplacé.

Le faible nombre de capteurs utilisés se traduit par une simplicité de montage et de câblage et par une réduction du coût.

Selon une caractéristique de l'invention, le levier et le boîtier précités peuvent pivoter autour de l'axe de sélection de vitesse entre trois positions, comprenant une position médiane où un premier des aimants permanents est en regard du circuit électrique d'un premier capteur et le second des aimants permanents est écarté de sa position où il est en regard du circuit électrique de l'autre capteur, une position extrême où le premier aimant permanent est écarté de sa position en regard du circuit électrique du premier capteur et le second aimant permanent est en regard du circuit électrique du second capteur, et une autre position extrême où les deux aimants permanents sont écartés de leurs positions situées en regard des circuits électriques des capteurs.

Selon une autre caractéristique de l'invention, la partie inférieure du levier qui s'étend sous les axes de rotation comprend des moyens d'entraînement d'un organe pivotant relié par une tringlerie à la boite de vitesses du véhicule, ces moyens d'entraînement étant écartés et dégagés de l'organe pivotant quand le levier est dans l'une de ses positions extrêmes et venant en prise avec l'organe pivotant quand le levier est dans son autre position extrême.

Avantageusement, des moyens de blocage du levier, tels qu'un électro-aimant par exemple, sont prévus pour permettre de verrouiller le levier dans une position de sécurité correspondant à une position de stationnement du véhicule.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique de principe d'un capteur à magnétorésistances ;
- la figure 2 est une vue schématique en perspective du levier de commande de vitesses selon l'invention ;
- la figure 3 est une vue schématique de bout du levier de la figure 2, représenté dans une position médiane de commande de vitesses ;
- la figure 4 est une vue schématique de bout du levier dans la position de commande de vitesses représentée en figure 2.

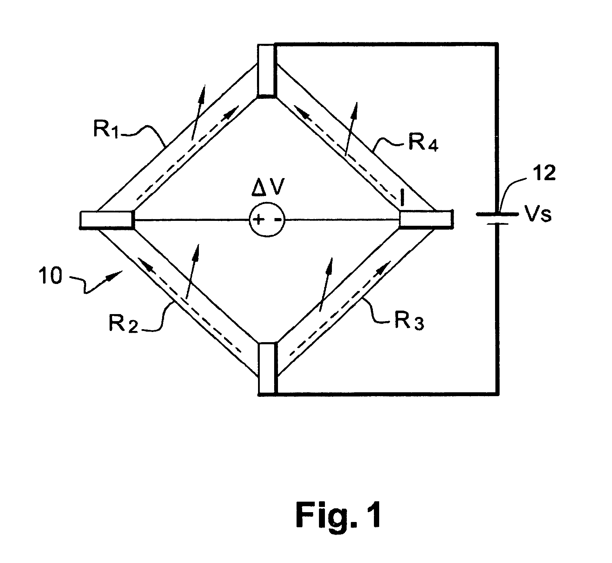

On se réfère d'abord à la figure 1 qui illustre schématiquement le principe d'un capteur à magnétorésistances.

Ce capteur 10 comprend un circuit électrique formé de quatre résistances R1, R2, R3 et R4 montées en pont, dont deux bornes opposées sont raccordées à des moyens 12 d'alimentation électrique en courant continu, le signal de sortie étant prélevé sur les deux autres bornes du pont et correspondant à une différence de potentiel ΔV.

Un aimant permanent non visible en figure 1 est déplaçable en regard du circuit électrique 10, par exemple dans un plan parallèle au plan du dessin. Les résistances R1, R2, R3 et R4 sont réalisées en un alliage conducteur dont la résistance électrique est variable en présence d'un champ magnétique. A partir d'un seuil de saturation du champ magnétique, la variation de la valeur de chaque résistance électrique dépend directement de l'angle entre la direction de passage du courant électrique dans la résistance (représenté en pointillés) et la direction de l'excitation magnétique, représentée par les flèches en traits pleins en figure 1.

Les capteurs à magnétorésistances présentent un certain nombre d'avantages, tels que l'insensibilité aux coefficients de température des aimants permanents, aux dispersions des caractéristiques des aimants, aux chocs et aux vibrations, l'acceptation de tolérances mécaniques plus élevées, l'utilisation d'aimants à faible coût, et une mesure directe de l'angle de déplacement de l'aimant permanent.

La présente invention prévoit d'équiper un levier de commande de vitesses pour véhicule automobile de deux de ces capteurs à magnétorésistances pour détecter tous les déplacements et les changements de positions du levier et commander en conséquence les changements de vitesses dans une boite de vitesses mécanique équipée d'actionneurs électriques.

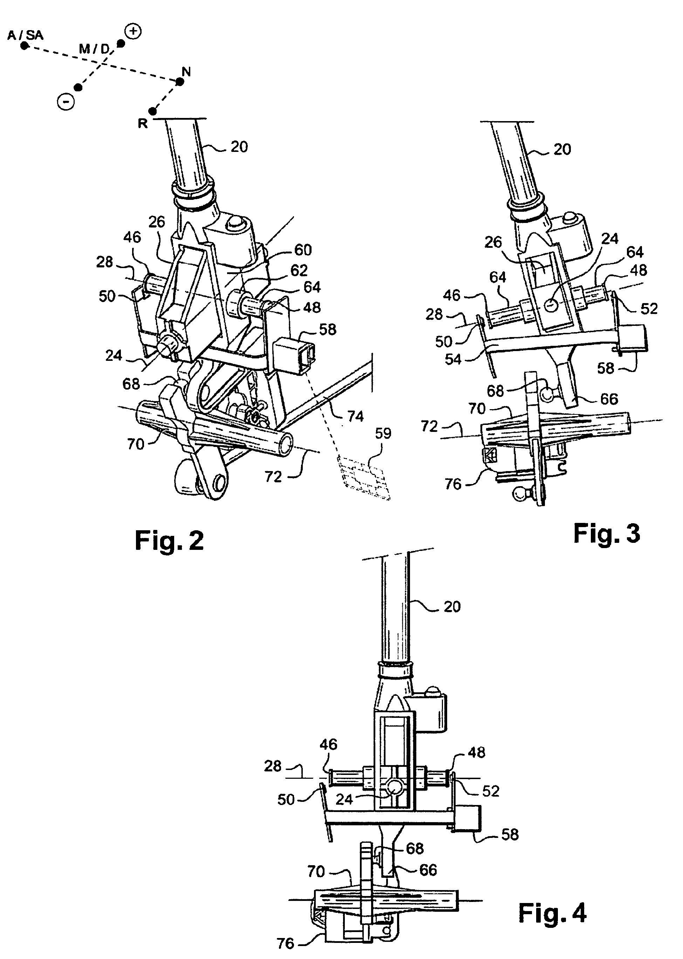

Le levier est déplaçable entre diverses positions dans une grille de vitesses qui est représentée en figure 2 en traits pointillés à l'extrémité supérieure du levier et qui comprend une position A/SA de commutation entre une commande automatique des vitesses et une commande semi-automatique, une position M de commande impulsionnelle, une position + de montée de vitesse, une position - de descente de vitesse, une position neutre N et une position de marche arrière R.

La grille de vitesses comprend une première voie rectiligne qui s'étend de la position A/SA à la position N en passant par la position M, une deuxième voie perpendiculaire à la première et s'étendant entre les positions + et - en passant par la position M, et une troisième voie, parallèle à la deuxième voie et s'étendant entre les positions N et R.

La position M de commande impulsionnelle de montée et descente de vitesses correspond également à une position D de marche avant automatique.

Le levier de commande de vitesses selon l'invention comprend essentiellement une tige cylindrique 20 dont l'extrémité supérieure est équipée d'un pommeau et dont la partie médiane est montée à rotation sur un boîtier 26 autour d'un axe 28 d'engagement des vitesses, le boîtier 26 étant lui-même monté à rotation dans des moyens fixes de support (non représentés) via un arbre dont l'axe 24 définit l'axe de sélection de vitesse.

La partie intermédiaire du levier forme une chape 60 autour du boîtier 26, chaque bras de la chape 60 comportant une douille cylindrique 62 portant un tronçon d'arbre 64 s'étendant le long de l'axe 28 d'engagement de vitesse.

Avantageusement, les deux axes 24, 28 sont dans un même plan.

Les aimants permanents 46 et 48 des deux capteurs à magnétorésistances équipant le levier sont montés fixement aux extrémités des tronçons d'arbres 64 et sont destinés à être amenés chacun en regard d'un circuit électrique d'un capteur du type décrit en figure 1 selon que le levier 20 est dans une position angulaire ou dans une autre autour de l'axe de sélection 24.

Les circuits électriques des deux capteurs sont formés sur deux parties 50 et 52 d'un circuit imprimé 54 porté par les moyens fixes de support non représentés. Ce circuit imprimé 54 est associé à un connecteur 58, au moyen duquel les signaux de sortie des capteurs sont appliqués à un calculateur 59.

L'extrémité inférieure 66 du levier 20 porte un doigt 68, à tête de rotule par exemple, destiné à s'engager dans une rainure d'un organe 70 monté pivotant autour d'un axe fixe 72 et relié par une tringlerie 74 à la boite de vitesses du véhicule.

Un moyen de blocage en position tel qu'un électroaimant 76 par exemple, est associé à la partie inférieure du levier 20 pour l'immobiliser dans la position N quand le véhicule est en stationnement.

Ce levier de vitesses est utilisé de la façon suivante.

Dans la position représentée en figure 3, qui est une position stable, le levier se trouve dans la position M/D de marche avant automatique ou de commande impulsionnelle de vitesse. Pour sélectionner la position M ou la position D, on déplace le levier vers la gauche dans la position A/SA qui est une position instable et on le laisse revenir ou on le ramène dans la position M/D.

Lorsqu'un déplacement du levier dans la position A/SA permet de sélectionner la position M de commande impulsionnelle, un déplacement ultérieur du levier vers la position + commande le passage au rapport de vitesse supérieur, tandis que le déplacement du levier dans l'autre sens vers la position - commande le passage au rapport de vitesse inférieur.

Un nouveau déplacement du levier dans la position A/SA permet de sélectionner la position D de marche avant automatique.

Si le levier est déplacé de cette position vers la position N qui est également une position stable, le levier est amené en position neutre et peut ensuite être déplacé dans la position R de marche arrière.

Dans la position représentée aux figures 2 et 4, le levier est dans la position N de la grille de vitesses précitée, le doigt à tête de rotule 68 est engagé dans l'organe 70, l'aimant permanent 48 du second capteur se trouve en regard du circuit électrique 52 qui est perpendiculaire à l'axe d'engagement 28 défini par les tronçons d'arbre 64, de sorte que la rotation du levier autour de l'axe 28 est détectée par le second capteur.

Dans cette position, l'autre aimant permanent 46 n'est pas en regard du circuit électrique 50 du premier capteur, et sa rotation causée par la rotation du levier autour de l'axe d'engagement 28 n'est pas détectée par le premier capteur.

Le levier peut être amené ensuite, par rotation autour de l'axe 24, dans la position M/D de la figure 3.

Dans cette position, l'aimant permanent 46 du premier capteur est en regard du circuit électrique 50 du premier capteur, le circuit 50 étant perpendiculaire à l'axe 28, tandis que l'autre aimant permanent 48 n'est plus dans sa position située en regard du circuit électrique 52 du second capteur.

La rotation du levier 20 autour de l'axe d'engagement 28 sera donc détectée par le premier capteur et correspond aux commandes impulsionnelles de passage de vitesse, par déplacement du levier de la position M dans la position + ou dans la position -.

Dans cette position angulaire du levier de vitesse autour de l'axe 24, le doigt 68 est écarté de l'organe 70 et la rotation du levier autour de l'axe 28 n'a aucun effet sur la tringlerie 74.

Le levier 20 peut ensuite être amené, par rotation autour de l'axe 24 dans le sens contraire des aiguilles d'une montre en figure 3, dans la position A/SA qui est la position de commutation entre la commande impulsionnelle des vitesses et la marche avant automatique.

Quand le levier est dans cette position A/SA, les aimants permanents 46, 48 des capteurs ne sont pas en regard des circuits électriques correspondants 50, 52 mais le déplacement de l'aimant permanent 46 du premier capteur depuis sa position en regard du circuit 50 est détecté par le calculateur et interprété comme un déplacement vers la position A/SA.

De même, le retour de l'aimant 46 devant le circuit électrique 50 du premier capteur est détecté et interprété comme le déplacement du levier de la position A/SA dans la position M/D.

Quand un aimant permanent 46, 48 d'un capteur se trouve en face du circuit électrique 50, 52 correspondant, la rotation de l'aimant permanent par rapport au circuit électrique autour de l'axe 28 est détectée et interprétée comme une commande de rapport de vitesse. Quand l'aimant permanent 46, 48 du capteur est déplacé par rapport au circuit électrique correspondant 50, 52 par rotation du levier autour de l'axe 24, l'arrivée de l'aimant permanent en regard du circuit électrique ou son départ de cette position est détecté et interprété comme un signal de sélection, la combinaison des signaux de sortie des deux capteurs permettant de détecter les déplacements du levier entre les positions A/SA, M/D et N.

Les signaux de sortie des capteurs sont amplifiés, numérisés et traités par le calculateur 59 qui commande de façon correspondante les actionneurs de la boîte de vitesses du véhicule.

L'invention permet donc de suivre de façon continue les déplacements du levier et de connaître à tout moment la position dans laquelle se trouve le levier.

Il est de plus facile de modifier les courses de déplacement du levier. En effet, quand un levier selon l'invention a été mis au point pour un véhicule d'un modèle donné, il est possible de l'adapter sans difficulté à un véhicule d'un modèle différent, par simple programmation.

On peut également compenser les dispersions sur les positions prédéterminées dans lesquelles le levier doit être amené. On peut aussi positionner de façon simple le point de commutation électrique en fonction de la course et l'on peut créer des zones de commutation électrique distinctes en fonction du sens de déplacement du levier entre deux positions, l'une de ces zones de commutation correspondant au déplacement du levier dans un sens et l'autre zone au déplacement du levier dans le sens inverse.

## Revendications

1. Levier de commande de vitesses, en particulier pour véhicule automobile, monté à rotation autour de deux axes perpendiculaires (24, 28) de sélection et d'engagement de vitesses, et comprenant des capteurs de position du type sans contact dont les signaux de sortie sont appliqués à un calculateur déterminant les sens de déplacement et les positions du levier, **caractérisé en ce que** lesdits capteurs sont des capteurs à magnétorésistance et sont au nombre de deux, chaque capteur comprenant un aimant permanent (46, 48) porté par le levier et susceptible de se déplacer en regard d'un circuit électrique (50, 52) correspondant monté sur des moyens de support du levier, les aimants permanents (46, 48) des deux capteurs étant portés par le même arbre de rotation du levier.

2. Levier selon la revendication 1, **caractérisé en ce que** les deux aimants permanents (46, 48) des deux capteurs sont montés aux extrémités d'un arbre (64) d'engagement des vitesses.

3. Levier selon la revendication 1 ou 2, **caractérisé en ce qu'**il est monté à rotation sur un boîtier (26) autour de l'axe (28) d'engagement des vitesses, le boîtier (26) étant monté à rotation autour de l'axe (24) de sélection sur des moyens fixes qui portent également les circuits électriques (50, 52) des deux capteurs à magnétorésistances.

4. Levier selon l'une des revendications précédentes, **caractérisé en ce que** les deux circuits électriques (50, 52) des deux capteurs sont formés sur un même circuit imprimé (54) porté par les moyens fixes de support.

5. Levier selon l'une des revendications précédentes, **caractérisé en ce que** le levier et le boîtier (26) précités pivotent autour de l'axe (24) de sélection de vitesses entre trois positions, comprenant une position médiane où le premier aimant permanent (46) est en regard du circuit électrique (50) du premier capteur et le second aimant permanent (48) est écarté de sa position située en regard du circuit électrique (52) de l'autre capteur, une première position extrême où le premier aimant (46) est écarté de sa position située en regard du circuit électrique (50) du premier capteur et le second aimant (48) est dans sa position en regard du circuit électrique (52) du second capteur, et une deuxième position extrême où les deux aimants (46, 48) sont écartés de leurs positions situées en regard des circuits électriques (50, 52) des capteurs.

6. Levier selon la revendication 5, **caractérisé en ce que** sa partie inférieure (66) située sous les axes de sélection et d'engagement de vitesse (24, 28) comprend des moyens (68) d'entraînement d'un organe pivotant (70) relié par une tringlerie (74) à la boite de vitesses du véhicule, ces moyens d'entraînement étant dégagés de l'organe pivotant (70) quand le levier est dans sa position médiane et dans l'une de ses positions extrêmes et venant en prise avec l'organe pivotant (70) quand le levier est dans son autre position extrême.

7. Levier selon la revendication 6, **caractérisé en ce qu'**il comprend un moyen de blocage, tel qu'un électroaimant (76) par exemple, permettant de verrouiller le levier dans une position de sécurité.

## Claims

1. A gear control lever, in particular for a motor vehicle, mounted to pivot about two perpendicular axes (24, 28) for selection and for gear engagement, and including position sensors of the contactless type from which output signals are applied to a calculator that determines the movement directions and the positions of the lever, the lever being **characterized in that** said sensors are magnetoresistance sensors and are two in number, each sensor comprising a permanent magnet (46, 48) carried by the lever and suitable for moving in front of a corresponding electrical circuit (50, 52) mounted on support means for the lever, the permanent magnets (46, 48) of the two sensors being carried by the same lever pivot shaft.

2. A lever according to claim 1, **characterized in that** the two permanent magnets (46, 48) of the two sensors are mounted at the ends of a gear-engagement shaft (64).

3. A lever according to claim 1 or claim 2, **characterized in that** it is mounted to pivot on a housing (26) about a gear-engagement axis (28), the housing (26) being mounted to pivot about the selection axis (24) on means that are stationary and that also carry the electrical circuits (50, 52) of the two magnetoresistance sensors.

4. A lever according to any preceding claim, **characterized in that** the two electrical circuits (50, 52) of the two sensors are formed on a single printed circuit (54) carried by the stationary support means.

5. A lever according to any preceding claim, **characterized in that** the above-mentioned lever and housing (26) pivot about the gear-engagement axis (24) between three positions, comprising: a middle position in which the first permanent magnet (46) faces the electrical circuit (50) of the first sensor and the second permanent magnet (48) is away from its position situated facing the electrical circuit (52) of the other sensor; a first end position in which the first magnet (46) is away from its position situated facing the electrical circuit (50) of the first sensor while the second magnet (48) is in its position facing the electrical circuit (52) of the second sensor; and a second end position in which both magnets (46, 48) are away from their positions situated facing the electrical circuits (50, 52) of the sensors.

6. A lever according to claim 5, **characterized in that** the bottom portion (66) situated beneath the gear-engagement and selection axes (28, 24) includes drive means (68) for driving a pivot member (70) connected by rodding (74) to the gearbox of the vehicle, said drive means being disengaged from the pivot member (70) when the level is in its middle position and in one of its end positions, and engaging the pivot member (70) when the lever is in its other end position.

7. A lever according to claim 6, **characterized in that** it includes locking means, e.g. such as an electromagnet (76), enabling the lever to be locked in a safe position.

## Patentansprüche

1. Gangschaltungshebel, insbesondere für Kraftfahrzeuge, der drehbar um zwei zueinander senkrechte Achsen (24, 28) zur Auswahl und zum Einlegen der Gänge befestigt ist, und Positionsgeber des kontaktlosen Typs umfasst, deren Ausgangssignale an eine Berechnungseinheit angelegt werden, die Verlagerungsrichtungen und die Positionen des Hebels ermittelt, **dadurch gekennzeichnet, dass** die Geber magnetoresistive Geber sind, und in einer Anzahl von zwei vorgesehen sind, wobei jeder Geber einen Permanentmagneten (46, 48) umfasst, der von dem Hebel getragen wird und eingerichtet ist, sich in Bezug zu einem entsprechenden elektrischen Schaltkreis (50, 52) zu verlagern, der auf Halterungsmitteln des Hebels befestigt ist, wobei die Permanentmagneten (46, 48) der zwei Geber von der selben Drehwelle des Hebels getragen werden.

2. Hebel nach Anspruch 1, **dadurch gekennzeichnet, dass** die zwei Permanentmagneten (46, 48) der zwei Geber an Endabschnitten einer Welle (64) zum Einlegen der Gänge befestigt sind.

3. Hebel nach Anspruch 1 oder 2, **dadurch gekennzeichnet, dass** dieser über einem Gehäuse (26) drehbar um die Achse (28) zum Einstellen der Gänge befestigt ist, wobei das Gehäuse (26) drehbar um die zur Auswahl dienenden Achse (24) über Befestigungsmitteln befestigt ist, die ferner die elektrischen Schaltungen (50, 52) der zwei magnetoresistiven Geber tragen.

4. Hebel nach einem der vorangehenden Ansprüche, **dadurch gekennzeichnet, dass** die zwei elektrischen Schaltkreise (50, 52) der zwei Geber auf einer gleichen gedruckten Schaltung (54) ausgebildet sind, die von den Befestigungsmitteln der Halterung getragen wird.

5. Hebel nach einem der vorangehenden Ansprüche, **dadurch gekennzeichnet, dass** der Hebel und das genannte Gehäuse (26) um die Achse zur Auswahl der Gänge zwischen drei Positionen drehbar ist, die eine Mittelposition umfassen, in der der erste Permanentmagnet (46) dem elektrischen Schaltkreis (50) des ersten Gebers gegenüberliegt, und der zweite Permanentmagnet (48) neben seiner Position vorgesehen ist, die dem elektrischen Schaltkreis (52) des anderen Gebers gegenüber liegt; eine erste Außenposition, in der der erste Magnet (46) neben seiner Position vorgesehen ist, die gegenüber dem elektrischen Schaltkreis (50) des ersten Gebers liegt, und der zweite Magnet (48) in seiner Position gegenüber dem elektrischen Schaltkreis (52) des zweiten Gebers liegt; sowie eine zweite Außenposition, in der die zwei Magnete (46, 48) neben deren Positionen vorgesehen sind, die gegenüber den elektrischen Schaltungen (50, 52) der Geber liegen.

6. Hebel nach Anspruch 5, **dadurch gekennzeichnet, dass** sein unterer Abschnitt (66) unter den Achsen zur Auswahl und zum Einlegen der Gänge (24, 28) angeordnet ist, Antriebsmittel (68) eines Drehelements (70) über ein Gestänge (74) an dem Gangschaltungsgehäuse des Fahrzeugs befestigt sind, wobei die Antriebsmittel von dem Drehelement (70) gelöst sind, wenn der Hebel in seiner Mittelposition ist und in einer seiner Außenpositionen ist, und mit dem Drehelement (70) eingreift, wenn sich der Hebel in seiner anderen Außenposition befindet.

7. Hebel nach Anspruch 6, **dadurch gekennzeichnet, dass** dieser ein Blockierungsmittel umfasst, beispielsweise der Art eines Elektromagneten (76), das es ermöglicht, den Hebel in einer Sicherungsposition zu verriegeln.
